# EUROPEAN PATENT SPECIFICATION

(11) **EP 2 444 682 B1**
(45) Date of publication and mention of the grant of the patent: **06.03.2013**
(21) Application number: 11185556.5
(22) Date of filing: 18.10.2011
(51) Int. Cl.: F16D 7/10, F16D 41/08, F16D 43/18, F16D 41/07, F16D 43/04

(54) **Stop of slide for transmission structure**
Endanschlag für Getriebestruktur
Butoir de glissière de structure de transmission

(30) Priority: 20.10.2010 TW 099135738
(43) Date of publication of application: 25.04.2012
(73) Proprietor: Wen, Shih-Chou, New Taipei City 241 (TW)
(72) Inventor: Wen, Shih-Chou, New Taipei City 241 (TW)
(74) Representative: Horak, Michael

(56) References cited:
- DE-A1-102005 061 791
- TW-B- I 282 762
- TW-U- M 315 279

## Description

### (a) Technical Field of the Invention

The present invention generally relates to the field of variable transmission, and more particularly to a stop of a slide for transmission structure that has the advantages of simple structure, reduced manifesting cost, high rotational speed, and high torque and is effective in protecting a clutch component from being undesirably damaged so as to prolong the lifespan.

### (b) Description of the Prior Art

The present inventor has been issued with a number of patents regarding to continuous variable transmission. An example is shown in Taiwan Utility Model Publication No. M315279, wherein a main transmission shaft uses a frictional engagement force of a slide to drive a clutch wheel to rotate. The slide is arranged in a slide slot defined in the clutch wheel so that when the slide moves in the slide slot, a surface of a roll and the slide slot induce therebetween a frictional engagement force that drives the clutch wheel to rotate. However, when the slide received in the slide slot does not drive the rotation of the clutch wheel but the clutch wheel is kept in a rotating condition, the slide slot causes the roll to move in a direction toward a spring due to the frictional force, making the spring excessively compressed by the roll and thus damaged. It is thus desired to protect the clutch component of the continuous variable transmission from being damaged, which is goal of the present invention.

### SUMMARY OF THE INVENTION

An objective of the present invention is to provide a stop of slide for transmission structure that helps protecting a clutch component from being undesirably damaged and improving the service life thereof. Structurally, the present invention comprises an automatic transmission eccentric shaft device, a driving disc, an output shaft, and a plurality of slides. The automatic transmission eccentric shaft device comprises an input shaft and a centrifugal saddle that is movable with respect to the input shaft when the input shaft is rotating. The driving disc is coupled to the centrifugal saddle and the driving disc forms at least one slot. The output shaft comprises a clutch disc having a surface forming a slide channel. A casing has an inside wall forming a channel. The slides are respectively received in the slide channel and the channel. Each of the slides forms at least one notch. The notch comprises a slope section. The slope section forms a rounded corner and comprises a roll positioned thereon. The roll is biased by an elastic biasing element to move in a direction toward the rounded corner. Each of the slides has a side forming a bar, which carries a roller thereon, so that the slide is movably received in the slot by means of the roller. The notch is provided with a stop member. A frictional engagement force can be induced by the roll to drives the output shaft or the casing to rotate, providing the advantages of high rotational speed and high torque. When the roll is acted upon by a force to move in a direction away from the rounded corner, the stop member stops the roll and resists a force caused by the roll so as to protect the elastic biasing element from being excessively compressed and thus damaged by the roll.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a cross-sectional view of the present invention.
FIG 2 is an exploded view of the present invention.
FIG 3 is an exploded view of the slides and a slide channel according to the present invention.
FIG 4 is a perspective view showing the slides and the slide channel according to the present invention in an assembled form.
FIG 5 is a cross-sectional view showing an automatic transmission eccentric shaft device according to the present invention.
FIG 6 is a cross-sectional view demonstrating an operation of the automatic transmission eccentric shaft device according to the present invention that causes a centrifugal saddle to move up and down with respect to a seat.
FIG 7 is a cross-sectional view demonstrating an input shaft driving a driving disc to rotate in an eccentric fashion according to the present invention.
FIG 8 is a schematic view illustrating the slides that are received in a slide channel driving an output shaft to rotate according to the present invention.
FIG 9 is a schematic view illustrating a stop member stopping movement of rolls according to the present invention in order to prevent the rolls from completely compressing elastic biasing elements.
FIG 10 is an exploded view showing a stop member, a slide, and a slide channel according to a second embodiment of the present invention.
FIG 11 is a plan view of FIG 10 in an assembled form.
FIG 12 is an exploded view showing a stop member, a slide, and a slide channel according to a third embodiment of the present invention.
FIG 13 is a plan view of FIG 12 in an assembled form.
FIG 14 is a plan view showing a stop member, a slide, and a slide channel according to a fourth embodiment of the present invention in an assembled form.
FIG 15 is a plan view showing a stop member, a slide, and a slide channel according to a fifth embodiment of the present invention in an assembled form.
FIG 16 is an exploded view showing a stop member, a slide, and a slide channel according to a sixth embodiment of the present invention.
FIG 17 is a plan view of FIG 16 in an assembled form.
FIG 18 is a cross-sectional view showing an embodiment of the present invention that further comprises an arrestment device.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

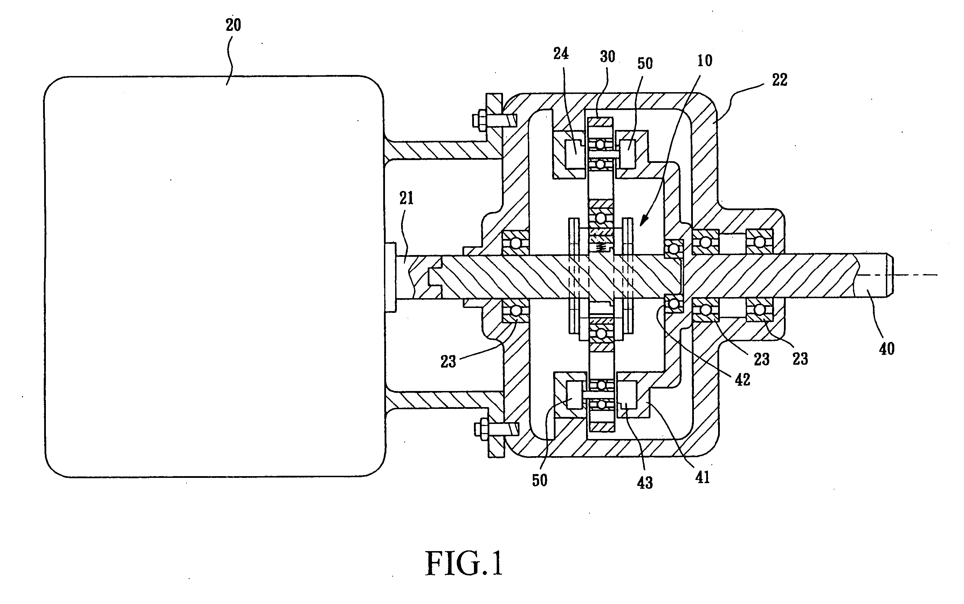

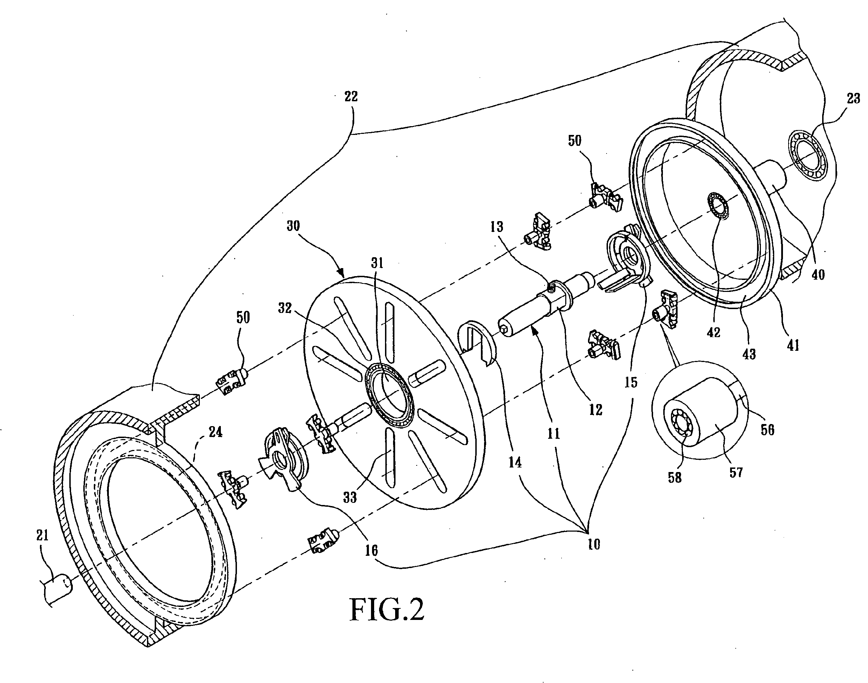

Referring to FIGS. 1 and 2, an embodiment of preferred structure of a stop of slide for transmission structure according to the present invention comprises an automatic transmission eccentric shaft device 10, a prime mover 20, a driving disc 30, an output shaft 40, and a plurality of slides 50. The prime mover 20 provide an input of power that puts the automatic transmission eccentric shaft device 10 into operation for driving eccentric rotation of the driving disc 30, whereby with the output shaft 40 being driven to rotate by frictional engagement force induced by the slides 50, advantages of fast rotational speed and enlarged torque are realized and the slides 50 are not easily damaged. Details will be given as follows:

The automatic transmission eccentric shaft device 10 is of a conventional structure and will be briefly described for the understanding of the present invention. The automatic transmission eccentric shaft device 10 comprises an input shaft 11 that is driven by the prime mover 20 for rotation. The input shaft 11 forms a seat 12 thereon. The seat 12 comprises an elastic body 13 mounted thereon and forms two flat flanks on opposite sides thereof to receive a centrifugal saddle 14 fit thereon to be movable up and down with respect to the seat 12 as being guided by the flat flanks. Mounted on opposite sides of the seat 12 and the input shaft 11 are two weight assemblies 15, 16. When the input shaft 11 rotates, a centrifugal force is induced to cause radial displacements of the weight assemblies 15, 16, which in turn drive the centrifugal saddle 14 to move up and down with respect to the seat 12.

The prime mover 20 can be a motor or an engine. The prime mover 20 comprises a driving shaft 21, which is coupled to the input shaft 11, whereby when the prime mover 20 rotates, the driving shaft 21 drives rotating the input shaft 11 to rotate. The prime mover 20 comprises a casing 22, which houses and protect the automatic transmission eccentric shaft device 10, the driving disc 30, the output shaft 40, and the slides 50 The casing 22 comprises a plurality of bearings 23 (such as ball bearings) arranged at two ends thereof The bearings 23 support the input shaft 11 and the output shaft 40 to ensure stable rotation of the input shaft 11 and the output shaft 40.

The driving disc 30 forms, in a center thereof, a through hole 31 that receives and retains therein a bearing 32. The driving disc 30 is fit over the centrifugal saddle 14 by means of the bearing 32. The driving disc 30 forms a plurality of radially extending slots 33.

The output shaft 40 is mounted to the casing 22 and is supported by the bearings 23. The output shaft 40 and the input shaft 11 have rotational axes that are identical. The output shaft 40 comprises a clutch disc 41. The clutch disc 41 comprises a bearing 42 (such as ball bearing) arranged at a location coaxially corresponding to the output shaft 40 so that the bearing 42 can be fit over an end of the input shaft 11 for supporting the input shaft 11 thereby making rotation of the input shaft 11 stable. The clutch disc 41 has a circumferential rim forming a slide channel 43.

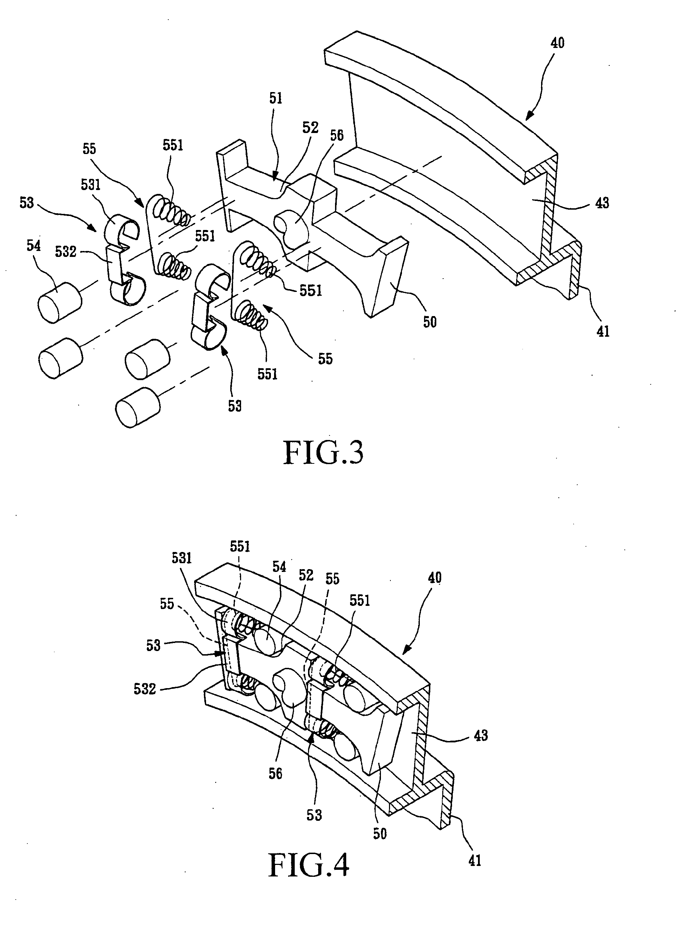

The slides 50 (also see FIGS. 3, 4, and 9) are evenly arranged on opposite sides of the driving disc 30. In the instant embodiment, four such slides 50 are arranged at each of the two sides of the driving disc 30. The slides 50 arranged on the two sides of the driving disc 30 are respectively received in the slots 33 in an alternate manner, so that the slides 50 that project beyond the surface of the driving disc 30 opposing the clutch disc 41 are slidably received in the slide channel 43, while the slides 50 that project beyond an opposite surface of the driving disc 30 are slidably received in a circumferential channel 24 defined in an inside wall of the casing 22. Each of the slides 50 forms a plurality of notches 51, and in the instant embodiment, the slide 50 comprises two such notches 51 formed in each of top and bottom of the slide. Each of the notches 51 comprises a slope section 52 and a stop member 53, wherein the slope section 52 forms a rounded corner and a roll 54 is received therein. The roll 54 is biased by an elastic biasing element 55 set in the notch 51 to move toward the rounded corner so that the roll 54 can be positioned to have a surface thereof higher than a height of the notch 51 for tightly engaging the slide channel 43. As such, the surface of the roll 54 and the slide channel 43 form a frictional engagement force therebetween. The elastic biasing element 55 comprises two biasing portions 551 that are connected but spaced from each other by a distance. The connection between the biasing portions 551 is fit to the slide 50 to have the biasing portions 551 tightly secured to the slide 50 without undesired separation. (If desired, the connection can be omitted.) The biasing portions 551 are received in the notches 51. The elastic biasing element 55 can be for example compression spring, so that the spring forces of the biasing portions 551 may bias the rolls 54. In the instant embodiment, the stop member 53 comprises two curved stop plates 531, which are connected to each other by a U-shaped connection plate 532 arranged therebetween. The connection plate 532 can be fit to and retained on the slide 50 so that the stop member 53 is securely mounted to the slide 50 without being detached easily, and the connection plate 532 also press the connection between the biasing portions 551 tightly against a surface of the slide 50. The stop plates 531 are thus set in the notches 51 of the top and bottom of the slide. Each biasing portion 551 of the elastic biasing element 55 has a root section that is enclosed by the corresponding stop plate 531, so that the stop plate 531 can stop a movement of the roll 54 heading toward the stop plate. Each of the slides 50 comprises a bar 56 projecting from one side thereof and the bar 56 carries a roller 57 thereon. The roller 57 is movably received in the corresponding slot 33. A bearing 58 (such as a ball bearing or a roller bearing) is arranged between the bar 56 and the roller 57 to facilitate the rotation of the roller 57 and reduce the frictional force between the roller 57 and the slot 33.

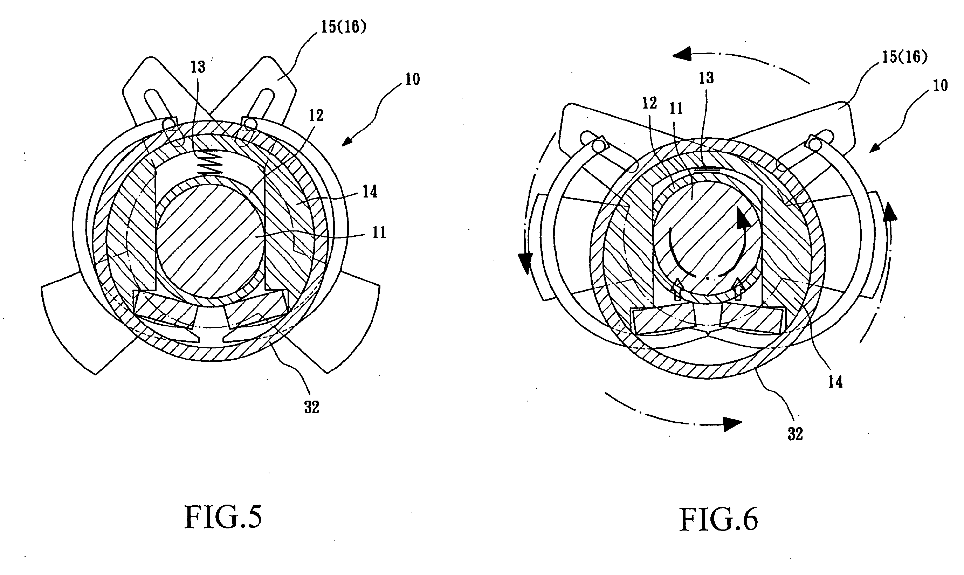

Referring to FIGS. 5 and 6, the input shaft 11 of the automatic transmission eccentric shaft device 10 is driven by the prime mover 20 to rotate. When the input shaft 11 rotates, a centrifugal force is induced to cause radial displacements of the weight assemblies 15,16, which in turn depress the centrifugal saddle 14 downward (in the direction shown in FIGS. 5 and 6), whereby the centrifugal saddle 14 and the bearing 32 are moved downward with respect to the seat 12 by a predetermined distance to assume an eccentric condition, also causing the driving disc 30 to displace downward by a predetermined distance to assume an eccentric condition for realizing continuous variable transmission. Since the structure and operation of the automatic transmission eccentric shaft device 10 are known, no further detail will be given herein.

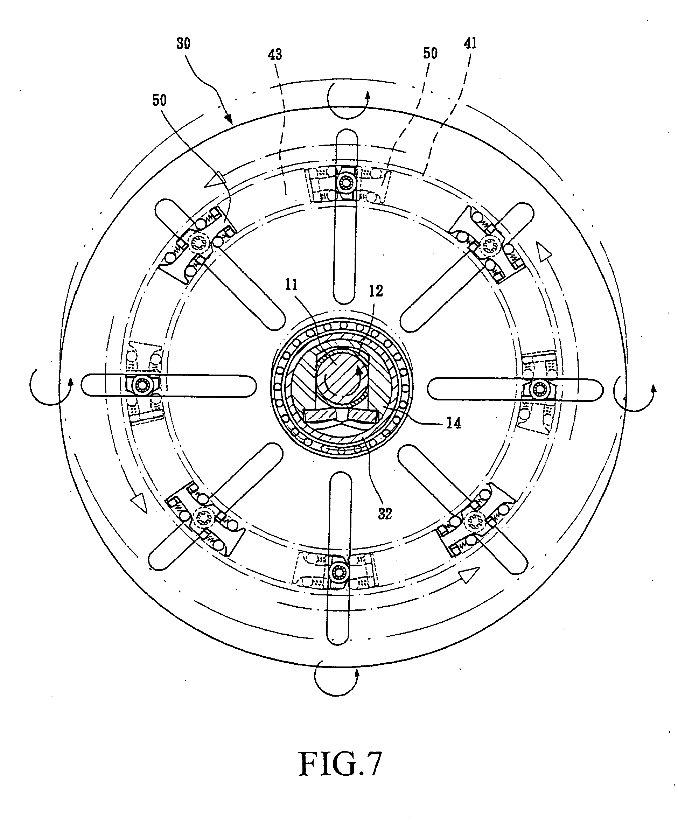

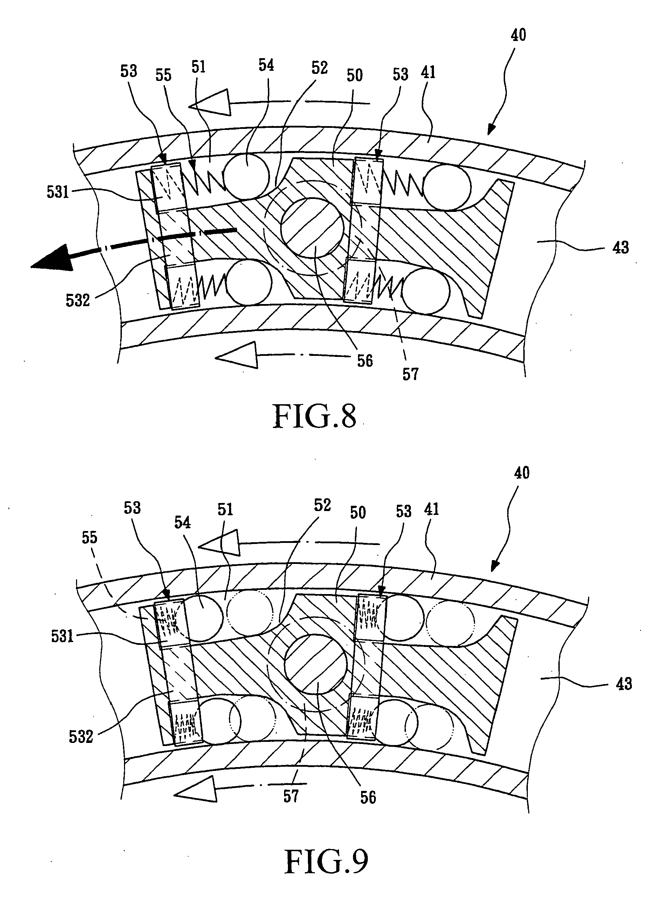

Referring to FIGS. 7 and 8, rotation of the input shaft 11 causes the driving disc 30 to rotate in an eccentric condition and makes the slides 50 sliding along the slide channel 43. Under this condition, the rolls 54 are set in tight engagement with the slide channel 43 by being compressed by the elastic biasing elements 55 so that the fictional engagement force induced between the surfaces of the rolls 54 and the slide channel 43 drives the output shaft 40 to rotate. Thus, through the combination of the automatic transmission eccentric shaft device 10, the prime mover 20, the driving disc 30, the output shaft 40, and the slides 50, the whole structure of the present invention is simple and the manufacturing cost is reduced and further advantages of high rotational speed and high torque can be realized.

Referring to FIG 9, when the slides 50 are located in the slide channel 43 by do not drive the output shaft 40, due to inertial effect, the output shaft 40 is kept in rotation (namely the slide channel 43 being still in rotation). Due to the frictional effect between the slide channel 43 and the surfaces of the rolls 54, the rolls 54 are caused to move toward the corresponding elastic biasing elements 55 and compressing the elastic biasing elements 55. Under this condition, the stop plates 531 of the stop members 53 may respectively engage and thus stop the movement of the rolls 54 and resist the compression forces caused by the rolls to prevent the elastic biasing elements 55 from being completely compressed and to protect the elastic biasing elements 55 from being excessively compressed and thus broken. Therefore, the present invention may not be easily damaged and the service life is extended.

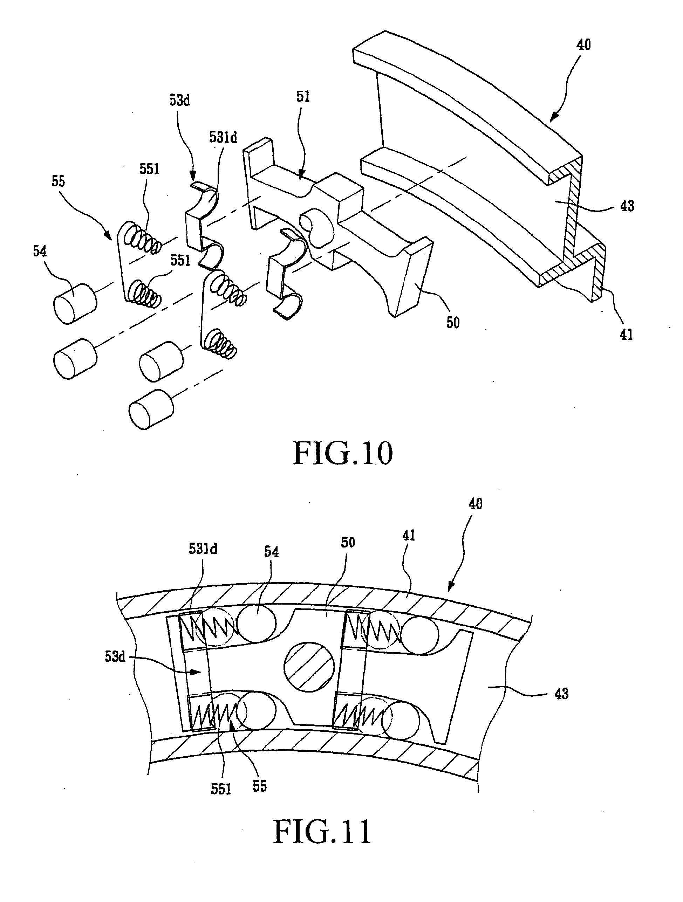

Referring to FIGS. 10 and 11, a structure of stop member according to a second embodiment of the present invention is provided, wherein the stop member 53d comprises two C-shaped curved plates 531d that are spaced from each other by a distance and are connected to each other. A connection between the curved plates 531 d is fit to the slide 50 so that the stop member 53d can be securely mounted to the slide 50 without being detached easily. The curved plates 531 d are respectively positioned in the notches 51. Further, the elastic biasing element 55 associated with each curved plate has a biasing portion 551 of which a root is properly enclosed by the curved plate 531 d so that the curved plate 531 d may function to stop excessive movement of the roll 54.

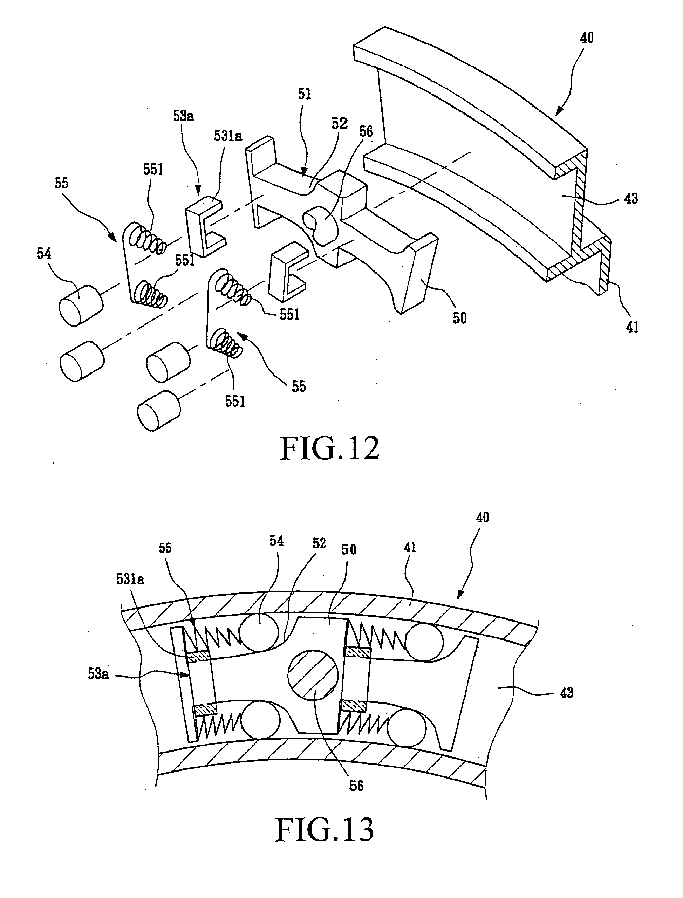

Referring to FIGS. 12 and 13, a structure of stop member according to a third embodiment of the present invention is provided, wherein the stop member 53a has a U-shaped configuration, and the stop member 53a comprises two fitting blocks 531 a that are spaced from each other by a distance and are connected to each other. A connection between the fitting blocks 531a is fit to the slide 50 so that the stop member 53a can be securely mounted to the slide 50 without being detached easily The fitting blocks 531 a are positioned in the notches 51, so that the fitting blocks 531 a may function to stop excessive movement of the roll 54.

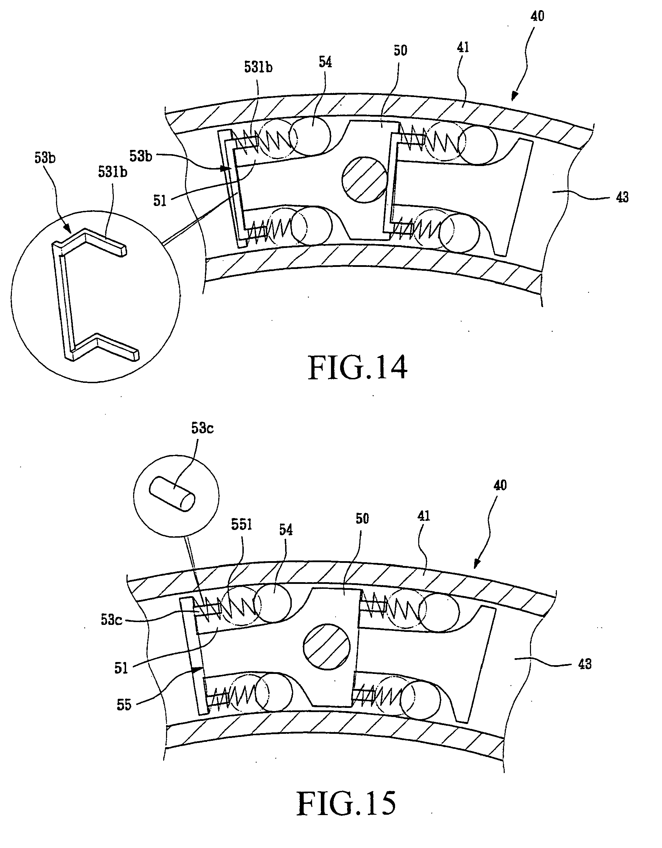

Referring to FIG 14, a structure of stop member according to a fourth embodiment of the present invention is provided, wherein the stop member 53b comprises a substantially U-shaped frame and the stop member 53b comprises two L-shaped stop bars 531 b that are spaced from each other by a distance and are connected to each other. A connection between the stop bars 53 1b is fit to the slide 50 so that the stop member 53b can be securely mounted to the slide 50 without being detached easily. The stop bars 53 1b are positioned in the notches 51, so that the stop bars 531b may function to stop excessive movement of the roll 54.

Referring to FIG 15, a structure of stop member according to a fifth embodiment of the present invention is provided, wherein the stop member 53c comprises a cylinder. The stop member 53c is fixed to a side wall of the corresponding notch 51 and the stop member 53c is received in the corresponding biasing portion 551 of the elastic biasing element 55, so that the stop member 53c may function to stop excessive movement of the roll 54

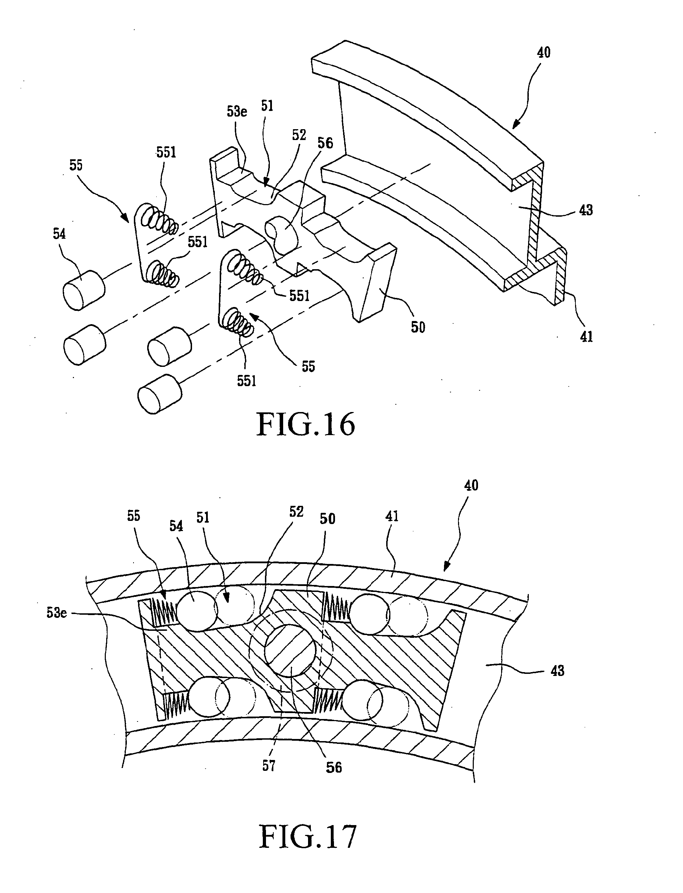

Referring to FIGS. 16 and 17, a structure of stop member according to a sixth embodiment of the present invention is provided, wherein the stop member 53e is integrally formed in the corresponding notch 51.

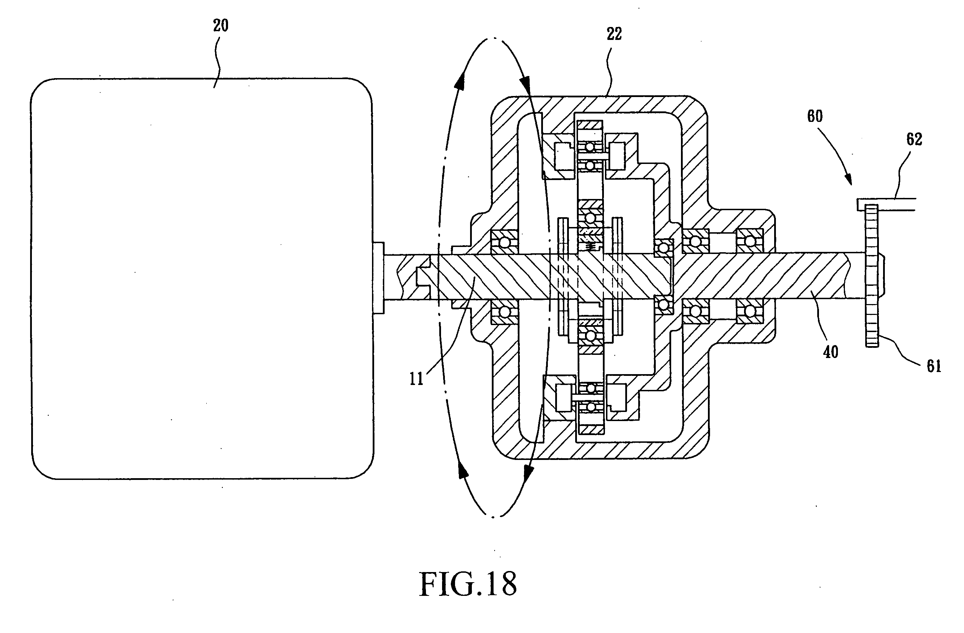

Referring to FIG 18, the present invention may further comprise an arrestment device 60 mounted on the output shaft 40. The arrestment device 60 comprises a ratchet wheel 61 mounted to the output shaft 40 and a pawl 62 engageable with the ratchet wheel 61, whereby a user may use the arrestment device 60 to set the output shaft 40 as a stationary shaft and make the casing 22 rotating with respect to the stationary output shaft 40.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A stop of slide for transmission structure, comprising:
an automatic transmission eccentric shaft device (10), which is adapted to receive a power input from a prime mover (20) for rotation, the automatic transmission eccentric shaft device (10) comprising an input shaft (11) and a centrifugal saddle (14) that is movable with respect to the input shaft (11) when the input shaft (11) is rotating;
a driving disc (30), which is coupled to the centrifugal saddle (14), the driving disc (30) forming at least one slot (33);
an output shaft (40), which comprises a clutch disc (41) having a surface forming a slide channel (43);
a casing (22), which has an inside wall forming a channel (24); and
a plurality of slides (50), which is respectively received in the slide channel (43) and the channel (24), each of the slides (50) forming at least one notch (51), which comprises a slope section (52), the slope section (52) forming a rounded corner and receiving a roll (54) positioned thereon, the roll (54) being biased by an elastic biasing element (55) to move in a direction toward the rounded corner, each of the slides (50) having a side forming a bar (56), which carries a roller (57) thereon, so that the slide (50) is movably received in the slot (33) by means of the roller (57);
**characterized in that** the notch (50) comprises a stop member (53, 53a, 53b, 53c, 53d, 53e);
wherein a frictional engagement force is induced by the roll (54) to drive the output shaft (40) or the casing (22) to rotate for providing the advantages of high rotational speed and high torque, and when the roll (54) is acted upon by a force to move in a direction away from the rounded corner, the stop member (53, 53a, 53b, 53c, 53d, 53e) stops the roll (54) and resists a force caused by the roll (54) so as to protect the elastic biasing element (55) from being excessively compressed and thus damaged.

2. The stop of slide for transmission structure according to claim 1, wherein the elastic biasing element (55) comprises two biasing portions (551) that are connected but spaced from each other by a distance, the connection between the biasing portions (551) being fit to the slide (50), the biasing portions (551) being respectively received in the notches (51), whereby the biasing portions (551) provide spring forces to bias the rolls (54).

3. The stop of slide for transmission structure according to claim 1, wherein the stop member (53a) comprises two fitting blocks (531a) that are spaced from each other by a distance and are connected to each other by a connection that is provided between the fitting blocks (531a) and fit to the respective slide (50) to have the fitting blocks (531 a) respectively positioned in the notches (51) defined in the slide (50), so that the fitting blocks (531a) stop the roll (54).

4. The stop of slide for transmission structure according to claim 1, wherein the stop member (53b) comprises two stop bars (531b) that are spaced from each other by a distance and are connected to each other by a connection that is provided between the stop bars (53b) and fit to the respective slide (50) to have the stop bars (531b) respectively positioned in the notches (50) defined in the slide (50), so that the stop bars (531b) stop the roll (54).

5. The stop of slide for transmission structure according to claim 1, wherein the stop member (53c) is fixed to a side wall of the corresponding notch (51) and the stop member (53c) is received in the elastic biasing element (55) so that the stop member (53c) stops the roll (54).

6. The stop of slide for transmission structure according to claim 1, wherein the stop member (53d) comprises two curved plates (531d) that are spaced from each other by a distance and are connected to each other by a connection that is provided between the curved plates (531d) and fit to the respective slide (50) to have the curved plates (531d) respectively positioned in the notches (51) defined in the slide (50), so that the curved plates (531d) stop the roll (54).

7. The stop of slide for transmission structure according to claim 1, wherein the stop member (53) comprises two curved stop plates (531) that are spaced from each other by a distance and are connected to each other by a connection plate (532), the connection plate (532) being fit to the respective slide (50) to have the stop plates (531) respectively positioned in the notches (51) defined in the slide (50), the elastic biasing element (55) having a root that is enclosed by the respective stop plate (531), so that the stop plate (531) stops the roll (54).

8. The stop of slide for transmission structure according to claim 1, wherein the stop member (53e) is integrally formed with the notch (51) of the respective slide (50).

## Patentansprüche

1. Ein Anschlag des Einlaufschuhs für die Übertragungsstruktur, bestehend aus:
Einem automatischen exzentrischer Übertragungswellengerät (10), das so gestaltet ist, um die Eigangsleistung von einem Antriebsmotor (20) für Rotation zu empfangen, das automatische
exzentrische Übertragungswellengerät (10) besteht aus einer Antriebswelle (11) und aus einer Zentrifugalanschlussklemme (14) die im Bezug auf die Antriebswelle (11) beweglich ist, wenn die Antriebswelle (11) sich dreht;
Eine Antriebsscheibe (30), die an dem Zentrifugalsattel (14) angeschlossen ist, eine Antriebsscheibe (30), die mindestens eine Nische bildet (33); eine Abtriebswelle (40), die eine Kupplungsscheibe (41) enthält, mit einer Fläche die einen Gleitkanal bildet (43);
Ein Gehäuse (22), die einen Innenwand hat, die ein Kanal (24) bildet
Und
Eine Mehrheit von Gleitbahnen (50), die in dem Gleitkanal (43) und in dem Kanal (24) empfangen wird, jede der Gleitbahnen (50) bildet mindestens eine Aussparung (51), die einen Böschungsabschnitt (52) enthält, der Böschungsabschnitt (52) bildet eine gerundete Ecke und empfängt eine Rolle (54) positioniert darauf und dabei ist die Rolle (54) von einem elastischen Vormagnetisierungselement (55) vorbelastet, um sich in die Richtung der gerundeten Ecke zu bewegen, jede der Gleiter (50) hat eine Seite, die eine Stange (56) bildet, die einen Rolle (57) darauf hat, sodass der Gleiter (50) in der Aussparung (33) beweglich mithilfe des Rollers (57) empfangen wird;
Charakterisiert durch die Tatsache, dass die Aussparung (50) ein Anschlagstück enthält (53, 53a, 53b, 53c, 53d, 53e);
Wobei eine Reibungskraft von der Rolle (54) generiert wird, um die Abtriebswelle anzutreiben (40) oder das Gehäuse (22) zu drehen, um die Vorteile einer hohen Drehgeschwindigkeit und eines hohen Drehmoments, und wenn die Rolle (54) von einer Kraft angetrieben wird, um sich in einer Richtung weg von der gerundeten Ecke zu bewegen, so stoppt das Anschlagstück (53, 53a, 53b, 53c, 53d, 53d) die Rolle (54) und widersteht einer Kraft, die von der Rolle (54) generiert wird, sodass das elastische Vormagnetisierungselement (55) gegen Pressung und Beschädigung geschützt wird.

2. Das Halten des Gleiters für die Übertragungsstruktur gemäß Anspruch 1, wobei das elastische Vormagnetisierungselement (55) zwei Vormagnetisierungsabschnitte (551) enthält, die verbunden sind aber voneinander durch einen Abstand getrennt sind, die Verbindung zwischen den Vormagnetisierungsabschnitte (551) ist an dem Gleiter angepasst (50), die Vormagnetisierungsabschnitte (551) sind in den Aussparungen (51) aufgenommen, wobei die Vormagnetisierungsabschnitte (551) Federkräfte generieren, um die Rollen (54) vorzumagnetisieren.

3. Das Halten des Gleiters für die Übertragungsstruktur gemäß Anspruch , wobei das Anschlagstück (53a) zwei Fitting-Abschnitte (531a) enthalten, die von einander durch einen Abstand getrennt sind und die mit einander durch einen Anschluss verbunden sind, der zwischen den Fitting-Blöcke (531a) verfügbar ist und die an dem bestimmten Gleiter (50) angepasst sind, um die Fitting-Blöcke (531a) in den Aussparungen (51) zu positionieren, definiert in dem Gleiter (50), sodass die Fitting-Blöcke (531a) die Rolle (54) stoppen.

4. Das Halten des Gleiters für die Übertragungsstruktur gemäß Anspruch 1, wobei das Anschlagstück (53b) zwei Anhaltestangen (531b) enthält, die voneinander durch einen Abstand getrennt sind und die miteinander durch einen Anschluss verbunden sind, das zwischen den Anhaltestangen (53b) verfügbar ist und das so gestaltet ist, um an dem Gleiter (50) angepasst zu werden und um die Anhaltestangen (531b) in den Aussparungen (50) zu positionieren, definiert in dem Gleiter (50), sodass die Anhaltestangen (531b) die Rolle (54) stoppen.

5. Das Anhalten des Gleiters der Übertragungsstruktur gemäß Anspruch 1, wobei ein Anschlagstück (53c) an einer Seitenwand der entsprechenden Aussparung (51) befestigt wird und das Anschlagstück (53c) in das elastische Vormagnetisierungselement (55) empfangen wird, sodass das Anschlagstück (53c) die Rolle (54) stoppt.

6. Das Anhalten des Gleiters der Übertragungsstruktur gemäß Anspruch 1, wobei ein Anschlagstück (53d) zwei gewölbte Platten (531d) enthält, die von einander durch einen Abstand getrennt sind und die miteinander durch einen Anschluss verbunden sind, das zwischen den gewölbten Platten (531d) verfügbar ist und in der Aussparung (50) passen, um die gewölbten Platten (531d) in den Aussparungen (51) zu positionieren, definiert in den Gleiter (50), sodass die gewölbten Platten (531d) die Rolle (54) anhalten.

7. Das Anhalten des Gleiters der Übertragungsstruktur gemäß Anspruch 1, wobei ein Anschlagstück (53) zwei gewölbte Anschlagplatten (531) enthält, die von einander durch einen Abstand getrennt sind und die miteinander durch eine Anschlussplatte (532) verbunden sind, und dabei wird die Anschlussplatte (532) an dem Gleiter (50) angepasst, um die Anschlagplatten (531) in den Aussparungen (51) zu positionieren, definiert in dem Gleiter (50), das elastische Vormagnetisierungselement (55) hat einen Wurzel, die in der bestimmten Anschlagplatte (531) eingehaust ist, sodass die Anschlagplatte (531) die Rolle (54) stoppt.

8. Das Anhalten des Gleiters der Übertragungsstruktur gemäß Anspruch 1, wobei ein Anschlagstück (53e) mit der Aussparung (51) des bestimmten Gleiters (50) integral gebildet wird.

## Revendications

1. Un arrêtoir de glissière pour structure de transmission, comprenant;
Un appareil d'axe de rotation de transmission automatique (10), adapté pour recevoir l'alimentation d'un moteur principal (20) pour la rotation, l'appareil d'axe de rotation de transmission automatique (10) comprenant un arbre d'entrée (11), et une scelle centrifugée (14) qui est mobile par rapport à l'arbre d'entrée (11), lorsque l'arbre d'entrée (11) tourne;
Un disque d'entrainement (30) accouplé à la scelle centrifugée (14), le disque d'entrainement (30) formant au moins une fente (33);
Un arbre de sortie (40), comprenant un disque d'embrayage (41) avec un côté formant un rail (43);
Un boitier (22) avec une paroi interne formant un canal (24);
et
une multitude de glissières (50) respectivement logées dans le rail (43) et le canal (24), chacune des glissières (50) formant au moins un cran (51) qui possède une partie pentue (52), la partie pentue (52) formant un coin arrondie logeant un rouleau (54) positionné placé dessus, le rouleau (54) biaisé par un élément de polarisation élastique (55) pour se déplacer vers le coin arrondi, chacune des glissières (50), ayant un côté formant une barre (56), portant un rouleau (57) par-dessus, pour que la glissière (50) logée de façon mobile dans la fente (33) à l'aide du rouleau (57);
**caractérisé en ce que** le cran (50) comprenne un élément stationnaire (53, 53a, 53b, 53c, 53d, 53e);
dans lequel un effort de force de frottement est provoqué par le rouleau (54) pour conduire l'arbre de sortie (40) ou le boitier (22) à tourner afin de fournir les avantages de vitesse de rotation et de couples élevés, et quand le rouleau (54) est sollicité par une force pour se déplacer loin du coin arrondie, l'élément stationnaire (53,53a, 53b,53c,53d,53e) arrête le rouleau (54) et résiste à une force causé par le rouleau (54) dans le but de protéger l'élément de polarisation élastique (55) d'une compression trop intense et de dommages.

2. L'arrêtoir de glissière pour structure de transmission selon la réclamation 1, dont l'élément de polarisation élastique (55) possède deux parties de polarisation (551) qui sont connectées et tenues à distance de chacune, la connexion entre les parties de polarisation (551) ajustées sur la glissière (50), les parties de polarisations (551) logées respectivement dans les crans (51), dans laquelle les parties de polarisation (551) fournissent des forces de rappel pour biaiser les rouleaux (54).

3. L'arrêtoir de glissière pour structure de transmission selon la réclamation 1, dans laquelle l'élément stationnaire (53a) possède deux ancrages de poulie (531 a), qui sont séparés entre eux par une distance et connectés entre eux par une connexion fournie entre ancrages de poulie (531 a) et s'ajustent à la glissière respective (50) pour que les ancrages de poulie(531a) soient positionnés respectivement dans les crans (51) définis dans la glissière (50), pour qu'ainsi les ancrages de poulie (531 a) arrêtent le rouleau (54).

4. L'arrêtoir de glissière pour structure de transmission selon la réclamation 1, dont l'élément stationnaire (53b), possède deux barres d'arrêt (531 b)qui sont séparées entre elles par une distance et connectées entre elles par une connexion fournie entre les barres d'arrêts (531 b)et s'ajustent à la glissière respective (50) pour que les barres d'arrêts soient positionnées respectivement dans les crans (50) définis dans la glissière (50), pour qu'ainsi les barres d'arrêt (531 b) arrêtent le rouleau (54).

5. L'arrêtoir de glissière pour structure de transmission selon la réclamation 1, dont l'élément stationnaire (53c) est fixé à une paroi latérale du cran correspondant (51) et l'élément stationnaire (53c) est logé dans les éléments de polarisation élastiques (55) afin que l'élément stationnaire (53c) stoppe le rouleau (54).

6. L'arrêtoir de glissière pour structure de transmission selon la réclamation 1, dont l'élément stationnaire (53d), possède deux plaques courbes (531d)qui sont séparées entre elles par une distance et connectées entre ellespar une connexion fournie entre les plaques courbes (531d)et s'ajustent à la glissière respective (50) pour que les plaques courbes soient positionnées respectivement dans les crans (51) définis dans la glissière (50), pour qu'ainsi les plaques courbes (531d) arrêtent le rouleau (54).

7. L'arrêtoir de glissière pour structure de transmission selon la réclamation 1, dont l'élément stationnaire (53), possède deux plaques courbes stationnaires (531)qui sont séparées entre elles par une distance et connectées entre elles par une plaque de raccordement (532), les plaques de raccordement (532) s'ajustant à la glissière respective (50) pour que les plaques stationnaires (531) soient positionnées respectivement dans les crans (51) définis dans la glissière (50), l'élément de polarisation élastique (55) ayant une source enserrée par la plaque stationnaire respective (531) pour qu'ainsi la plaque stationnaire (531) arrête le rouleau (54).

8. L'arrêtoir de glissière pour structure de transmission selon la réclamation 1, dont l'élément stationnaire (53 e) est formé d'un seul tenant avec le cran (51) de la glissière (50) respective.
